# EUROPEAN PATENT SPECIFICATION

(11) **EP 1 433 402 B1**
(45) Date of publication and mention of the grant of the patent: **15.03.2006**
(21) Application number: 02760054.3
(22) Date of filing: 16.08.2002
(51) Int. Cl.: A47J 19/00, A47J 19/02, A47J 43/046, A47J 43/25

(54) **JUICE EXTRACTOR DEVICE FOR FRUITS OR VEGETABLES**
ENTSAFTUNGSVORRICHTUNG FÜR OBST ODER GEMÜSE
CENTRIFUGEUSE POUR FRUITS OU LEGUMES

(30) Priority: 30.09.2001 CN 01264292
(43) Date of publication of application: 30.06.2004
(73) Proprietor: Zheng, Rongyuan, San Chong City, Taibei County 242 (TW); Lin, Guoyi, San Chong City, Taibei County 242 (TW)
(72) Inventor: Zheng, Rongyuan, San Chong City, Taibei County 242 (TW); Lin, Guoyi, San Chong City, Taibei County 242 (TW)
(74) Representative: Ivancic, Bojan
(86) International application number: PCT/CN2002/000569
(87) International publication number: WO 2003/028513

(56) References cited:
- EP-A- 0 684 000
- CN-Y- 2 160 302
- CN-Y- 2 353 278
- US-A- 4 429 626
- US-A- 4 852 814
- US-A- 5 222 430
- US-A- 5 433 144
- US-A- 5 761 993
- US-A- 6 058 833

## Description

### BACKGROUND OF THE INVENTION

The present invention relates to a fruit and vegetable juice extractor, and more particularly to a fruit and vegetable juice extractor into which a whole piece of fruit or vegetable may be fed to produce juice, so that cutting of the fruit or vegetable into small pieces before feeding is saved and the juice extractor is more effective and practical for use.

A fruit and vegetable juice extractor including, among other parts, a disc cutter rotatable at high speed, and a feed tube via which fruit or vegetable is fed to and ground by the disc cutter to produce juice is known from the EP 0 684 000 A1. Therein, it has been disclosed that a knife has been provided in the feed tube or knives having an upwardly directed cutting edge. Moreover, the knife or knives being attached to and supported by the feed tube. Furthermore, the food pusher being bifurcated or otherwise shaped to pass downwardly past the knife or knives. Although the above mentioned known solution fulfils the requirements as to the juice extraction it still has some disadvantages. Particles of fruit and/or vegetable, for instance, remain in the bifurcated area of the food pusher requiring special care when cleaning. Also, the said knife or knives represent serious threath to hands of a person cleaning the juice extractor.

In addition, there exist also a great number of similar juice extractors comprising more or less the same drawbacks. Namely, the disc cutter for the above-described conventional fruit and vegetable juice extractor has a dead angle of grinding at a central area thereof due to the arrangement of cutter blades thereof. To avoid the central dead angle of grinding, the feed tube is normally located at an eccentric position on the juice extractor. For this reason, the feed tube is limited to a bore that could not be too large. Due to the limited bore of the feed tube, fruit and vegetable to fed into the juice extractor are preferably cut into small pieces before being fed into the feed tube. This will, of course, bring inconveniences to a user. In the event the feed tube is expanded to have an increased bore for receiving a whole piece of fruit or vegetable, the eccentric position of the feed tube necessitates an increased volume of the whole juice extractor to result in increased manufacturing cost and inconvenient storage of the juice extractor.

### SUMMARY OF THE INVENTION

A primary object of the present invention is to provide an improved fruit and vegetable juice extractor into which a whole piece of fruit or vegetable may be fed for grinding and juicing to save the trouble of cutting the fruit or vegetable into small pieces.

To achieve the above object, the present invention includes a disc cutter as described in the characterizing portion of claim 1. With the central dead angle of grinding removed from the disc cutter, it is possible for the feed tube to align with the center of the disc cutter and has a bore twice as large as that of the conventional feed tube without increasing the total volume of the juice extractor. And, the expanded bore of the feed tube allows feeding of whole pieces of fruit or vegetable into the feed tube.

Another object of the present invention is to provide an improved fruit and vegetable juice extractor that includes a hollow cylindrical feed tube, one side of which is chamfered to prevent whole pieces of fruit or vegetable fed thereinto from rotating along with the disc cutter while the latter rotates at high speed, so that the fed fruit or vegetable is fully ground to produce as much juice as possible.

A further object of the present invention is to provide an improved fruit and vegetable juice extractor that includes a plunger for pushing fruit or vegetable into a feed tube for grinding, and the plunger is provided at a bottom end surface with two intersected rows of teeth. These teeth firmly grip the fruit or vegetable fed into the feed tube and thereby prevent the fruit or vegetable in the feed tube from vibrating to facilitate smooth feeding of fruit or vegetable.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
- Fig. 1: is an assembled perspective view of a fruit and vegetable juice extractor according to the present invention;
- Fig. 2: is an exploded perspective view of Fig. 1;
- Fig. 3: Fig. 3 is a top plan view of a first embodiment of the disc cutter adopted in the fruit and vegetable juice extractor of the present invention;
- Fig. 4: is an assembled sectional view of Fig. 1; and
- Fig. 5: is a top plan view of a second embodiment of the disc cutter of the present invention.

### DETAILED DESCRIPTION OF THE PREFERRED EMBODIMENTS

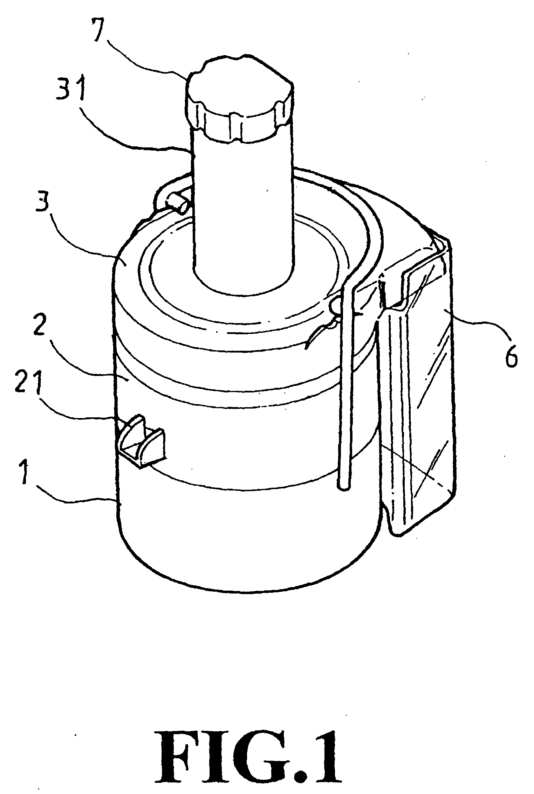

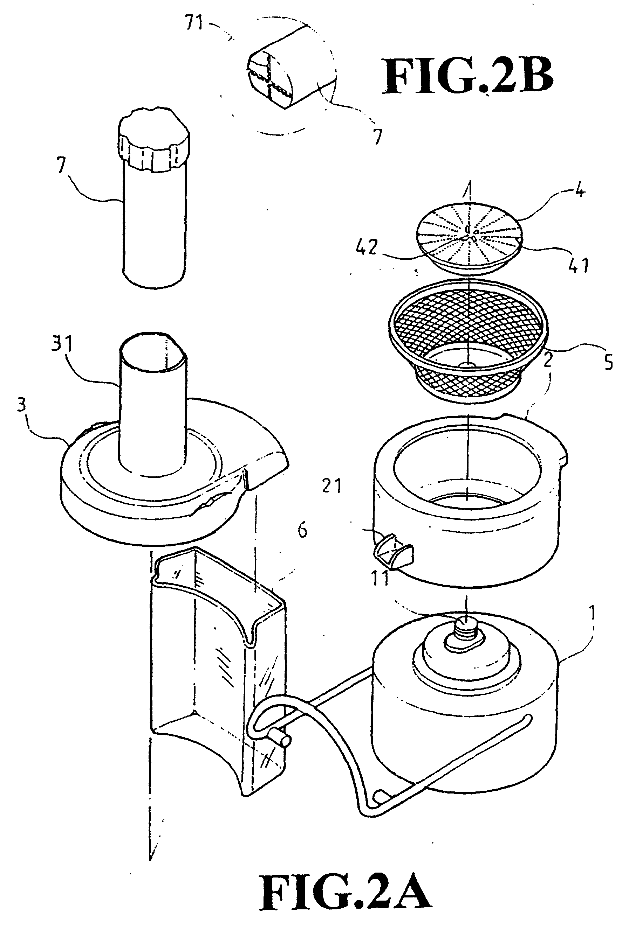

Please refer to Figs. 1 and 2 at the same time. The fruit and vegetable juice extractor of the present invention mainly includes a lower base 1, an upper base 2, and a top cover 3.

The lower base 1 is provided at a top center with a driving shaft 11 that is driven to rotate via a motor (not shown) in the lower base 1.

The upper base 2 is fitly mounted on the lower base 1 to receive a strainer basket 5 and a disc cutter 4 therein. The disc cutter 4, after being positioned in the strainer basket 5, is screwed onto the driving shaft 11. A spout 21 is provided at one lower side of the upper base 2 to release produced juice.

The top cover 3 is provided at a top center with a generally hollow cylindrical feed tube 31. One side of the feed tube 31 is properly chamfered. A pulp collector 6 is attached to one lower side of the top cover 3 to collect pulp centrifugally thrown out of the juice extractor.

The disc cutter 4 is provided at peripheral areas on a top surface thereof with radially arranged tooth-like cutter blades 41. A central area of the top surface of the disc cutter 4 is provided with curved blades 42 arranged in the form of a cross. A whole piece of fruit or vegetable without being cut into small pieces is fed into the juice extractor via the feed tube 31. A plunger 7 is used to push the fed fruit or vegetable deep into the feed tube 31. The plunger 7 is provided at a bottom end surface with two intersected rows of teeth 71 that firmly grip and prevent the fruit or vegetable in the feed tube 31 from vibrating or rotating while being pushed toward the disc cutter 4. The whole piece of fruit or vegetable is ground by the disc cutter 4 into mash to produce rich amount of juice that flows out of the upper base 2 via the spout 21. Any pulp or residue from the mashed fruit or vegetable is centrifugally thrown out of the strainer basket 5 and collected in the pulp collector 6.

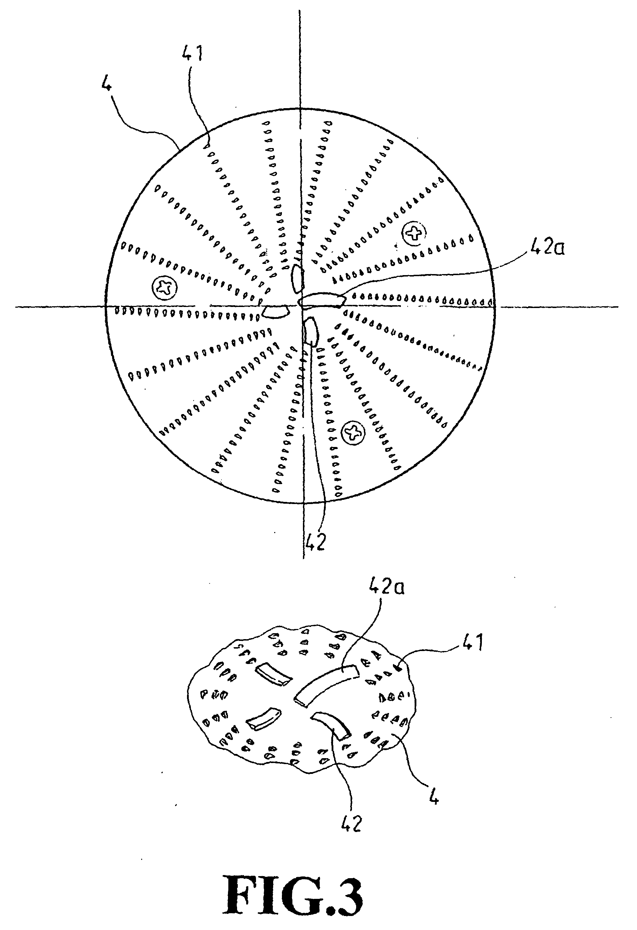

Please refer to Fig. 3. The disc cutter 4 of the present invention is provided at peripheral areas on its top surface with a plurality of tooth-like cutter blades 41 arranged into a plurality of radial rows. The central area of the disc cutter 4 is particularly provided with curved blades 42 that are radially arranged around a center of the disc cutter 4 to look like a cross. One of the curved blades 42, which is denoted with a reference number of 42a, has an end extends across the center of the disc cutter 4. Whereby, when the disc cutter 4 is driven by the driving shaft 11 to rotate at high speed and thereby grinding the fruit or vegetable fed to it, the curved blades 42, particularly the curved blade 42a, eliminate the dead angle of grinding that normally exists at the central area of the disc cutter of a conventional fruit and vegetable juice extractor. Thus, the whole piece of fruit or vegetable fed into the juice extractor could be completely ground and mashed to produce as much juice as possible. Moreover, since the curved blades 42 provided at the center of the disc cutter 4 eliminate the dead angle of grinding, it is not necessary for the feed tube 31 to locate at an eccentric position. On the contrary, the feed tube 31 may be aligned with the center of the disc cutter 4 and to have an increased diameter without the necessity of an increased volume for the bases 1 and 2.

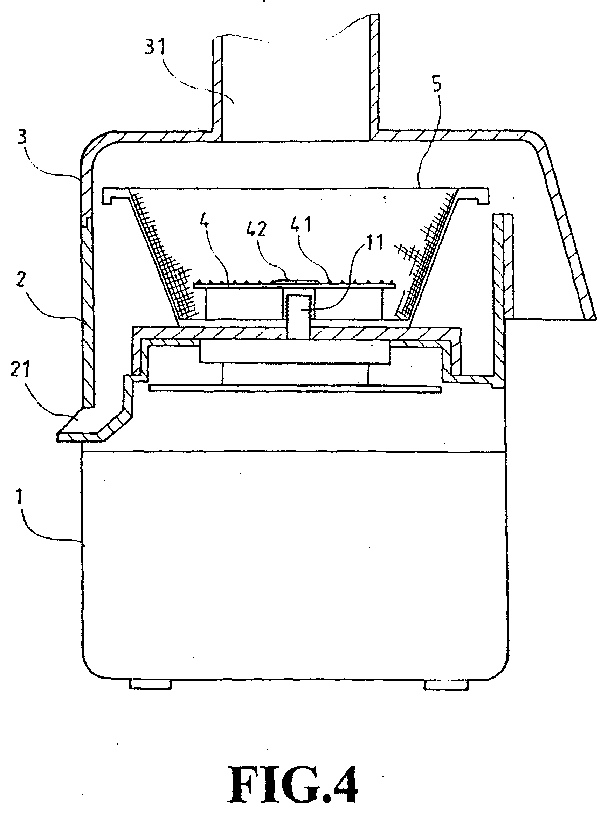

Please refer to Fig. 4 that is an assembled sectional view of the present invention. As can be clearly seen in Fig. 4, the feed tube 31 is located at a center of the whole juice extractor and is vertically aligned with the disc cutter 4. Since the whole disc cutter 4 is provided at peripheral areas with the tooth-like cutter blades 41 and at the central area with the curved blades 42, the whole piece of fruit or vegetable fed into the upper base 2 is completely cut and ground into mash by the blades 41, 42 to produce rich amount of juice without leaving any big solid piece due to any dead angle of grinding on the disc cutter 4.

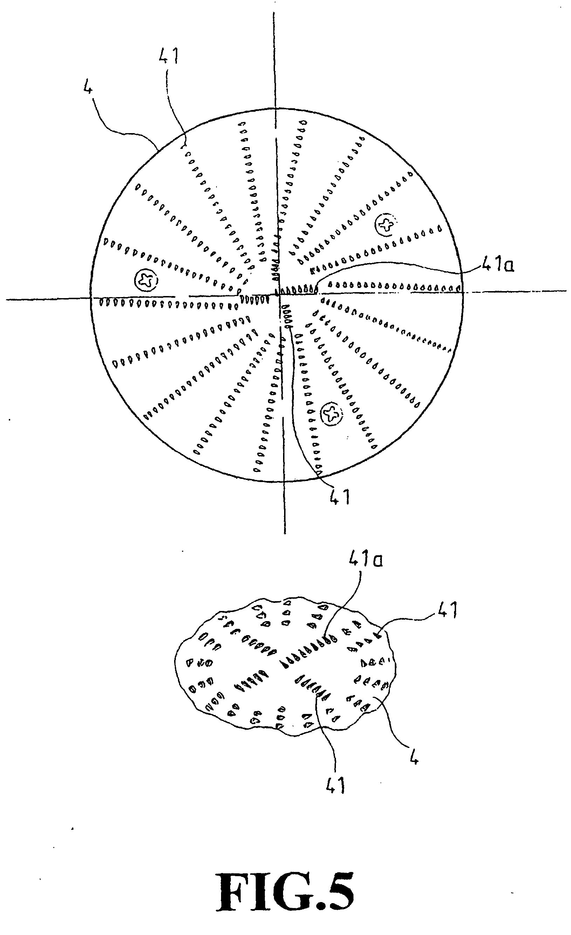

Another embodiment of the disc cutter 4 is shown in Fig. 5. In this embodiment, the disc cutter 4 is provided at the central area with tooth-like blades 41 arranged into, for example, four radial rows similar to a cross. Again, one of the four rows of tooth-like blades 41, which is denoted with a reference number of 41 a, has an end extended across the center of the disc cutter 4 to eliminate the dead .angle of grinding on the disc cutter 4.

## Claims

1. A fruit and vegetable juice extractor, comprising a lower base (1), an upper base (2) fitly mounted on said lower base (1), a strainer basket (5) received in said upper base (2), a disc cutter (4) having tooth-like cutter blades (41) radially arranged on peripheral areas thereof and located in said strainer basket (5), and a top cover (3), said lower base (1) being provided with a driving shaft (11), to which said disc cutter (4) located in said strainer basket (5) is screwed; said top cover (3) being provided at a top center with a hollow cylindrical feed tube (31), one side of which being properly chamfered; such that a whole piece of fruit or vegetable may be fed into said feed tube (31) and pushed with a plunger (7) toward said disc cutter (4) that is driven by said driving shaft (11) to rotate at high speed and thereby grind said fed fruit or vegetable into mash to produce rich amount of juice; and said fruit and vegetable juice extractor being ***characterized in that*** said disc cutter (4) is provided at a top central area with four radial curved blades (42) or four radial rows of tooth-like blades (41) arranged in the form of a cross, and that one of said curved blades (42a) or of said rows of tooth-like blades (41 a) has an end extended across a center of said disc cutter (4), such that any dead angle of grinding on said disc cutter (4) is eliminated.

2. The fruit and vegetable juice extractor as claimed in claim 1, wherein said plunger (7) is provided at a bottom end surface with a plurality of teeth (71) arranged in the form of a cross for firmly holding said whole piece of fruit or vegetable fed into said feed tube (31), so that said fruit or vegetable does not rotate along with said rotating disc cutter (4) and is more smoothly pushed toward said disc cutter (4) for grinding.

## Patentansprüche

1. Entsaftungsvorrichtung für Obst und Gemüse, die ein Unterteil (1), ein Oberteil (2), das auf dem Unterteil (1) anpassend angebracht ist, einen in das erwähnte Oberteil (2) augenommenen Filterkorb (5), ein in dem erwähnten Filterkorb (5) fixirtes Scheibenmesser (4) mit zähneartigen Messerklingen (41), die an Umfangsflächen des Scheibenmessers (4) radial angeordnet sind, und einen Deckel (3) aufweist, wobei das Unterteil (1) mit einer Antriebswelle (11) versehen ist, an welch letzterer das im Filterkorb (5) angeordneten Scheibenmesser (4) angeschraubt ist, wobei der Deckel (3) von oben und mittig mit einem hohlen zylindrischen Vorschubrohr (31) versehen ist, dessen erste Seite entsprechend abgekantet ist, so dass ein Gesamtstück von Obst oder Gemüse in das Vorschubrohr (31) eingeladen und durch einen Druckkolben (7) gegen das Scheibenmesser (4) gedrückt wird, welches durch die Antriebswelle (11) mit Hochgeschwindigkeit angetrieben wird, wodurch das gespeiste Obst oder Gemüse in Maische zerkleinert wird um eine reichhaltige Saftmenge zu erzeugen, ***dadurch gekennzeichnet,* dass** das Scheibenmesser (4) in seinem oberen Zentralbereich mit vier radial gekrümmten Klingen (42) oder mit vier kreuzartig angeordneten Radialreihen von zähneartigen Klingen (41) versehen ist, und dass eine der erwähnten Klingen (42a) oder eine der erwähnten Reihen der zähneartigen Klingen (41 a) ein Ende aufweist, welches über die Mitte des Scheibenmessers (4) derart gestreckt ist, dass jeder tote Zerkleinerungswinkel am Scheibenmesser (4) eliminiert wird.

2. Entsaftungsvorrichtung für Obst und Gemüse nach Anspruch 1, wobei der Druckkolben (7) am unteren Ende mit eine Fläche versehen ist, welche eine Reihe von kreuzartig angeordneten Zähnen (71) aufweist, um das in das Vorschubrohr (31) eingeladene Gesamtstück von Obst oder Gemüse festzuhalten, so dass Obst oder Gemüse keine Rotationsbewegung mit dem Scheibenmesser (4) durchführen und leichtgängiger gegen das Scheibenmesser (4) zur Zerkleinerung gedrückt werden kann.

## Revendications

1. Une centrifugeuse pour fruits et légumes, comportant une base inférieure (1), une base supérieure (2) convenablement montée sur ladite base inférieure (1), un panier-filtre (5) reçu dans ladite base supérieure (2), un disque à râper (4) ayant des lames à râper en forme de dent (41) radialement disposées sur leurs secteurs périphériques et situées dans ledit panier-filtre (5), et un couvercle supérieur (3), ladite base inférieure (1) étant munie d'un arbre de transmission (11), auquel ledit disque à râper (4) situé dans ledit panier-filtre (5) est vissé; ledit couvercle supérieur (3) étant fourni à un centre supérieur avec un tube d'alimentation cylindrique creux (31), dont un côté est correctement chanfreiné; de telle sorte qu'un morceau entier de fruit ou de légume peut être introduit dans ledit tube d'alimentation (31) et être poussé avec un poussoir (7) vers ledit disque à râper (4) qui est entraîné par ledit arbre de transmission (11) pour tourner à grande vitesse et pour broyer en pulpe de ce fait ledit fruit ou légume alimenté pour produire une abondante quantité de jus; et ladite centrifugeuse pour fruits et légumes étant ***caractérisée en ce que*** ledit disque à râper (4) est fourni à une zone centrale supérieure avec quatre lames incurvées radiales (42) ou quatre rangées radiales de lames en forme de dent (41) disposées en croix, et qu'une desdites lames incurvées (42a) ou desdites rangées de lames en forme de dent (41a) a une extrémité prolongée à travers un centre dudit disque à râper (4), de telle sorte que n'importe quel angle mort de broyage sur ledit disque à râper (4) soir éliminé.

2. La centrifugeuse pour fruits et légumes selon la revendication 1, dans laquelle ledit poussoir (7) est fourni sur une surface d'extrémité inférieure avec une pluralité de dents (71) disposées en croix pour tenir fermement ledit morceau entier de fruit ou de légume introduit dans ledit tube d'alimentation (31), de sorte que ledit fruit ou légume ne tourne pas avec ledit disque à râper rotatif (4) et est mieux poussé sans à-coup vers ledit disque à râper (4) pour le broyage.
